(19) Europäisches Patentamt
European Patent Office
Office européen des brevets

(11) Publication number: 0 375 659
A2

(12) # EUROPEAN PATENT APPLICATION

(21) Application number: 90101603.0

(51) Int. Cl.[5]: C08F 8/40

(22) Date of filing: 03.10.86

This application was filed on 26 - 01 - 1990 as a divisional application to the application mentioned under INID code 60.

(30) Priority: 04.10.85 US 784909

(43) Date of publication of application: 27.06.90 Bulletin 90/26

(60) Publication number of the earlier application in accordance with Art.76 EPC: 0 217 410

(84) Designated Contracting States: AT BE CH DE FR GB IT LI LU NL SE

(71) Applicant: UNION CARBIDE CORPORATION
39 Old Ridgebury Road
Danbury Connecticut 06817(US)

(72) Inventor: Colon, Ismael
57 Curtis Avenue
Piscataway, New Jersey 08854(US)
Inventor: Mallon, Charles Bernard
290 Shelburne Place
Belle Mead, New Jersey 08502(US)
Inventor: Johnson, Robert Norman
Frohlin Drive, Box 260A
Basking Ridge, New Jersey 07920(US)

(74) Representative: Barz, Peter, Dr. et al
Patentanwälte Dipl.-Ing. G. Dannenberg Dr. P. Weinhold, Dr. D. Gudel Dipl.-Ing. S. Schubert, Dr. P. Barz Siegfriedstrasse 8
D-8000 München 40(DE)

(54) **Phosphorylated reaction products and compositions incorporating such products.**

(57) Novel phosphorylated compositions of a hydroxyalkyl acrylate or methacrylate-lactone adduct having improved dispersion characteristics suitable for use in applications such as magnetic recording media are described.

EP 0 375 659 A2

# PHOSPHORYLATED REACTION PRODUCTS AND COMPOSITIONS INCORPORATING SUCH PRODUCTS

This invention relates to novel phosphorylated reaction products and, more particularly, to novel products for use in compositions such as magnetic recording media for enhancement of the dispersion and magnetic property characteristics of such medium.

Over the years, magnetic recording has come to occupy a vital place in a myriad of industries. Magnetic tape is accordingly utilized for audio, video, computer, instrumentation and other recordings. Magnetic recording media are utilized in a variety of forms, including, for example, magnetic cards and disks, reels, video tapes, high performance audio tapes, computer tapes, floppy disks, and the like.

While there are several different types of magnetic recording media, all types comprise a layer of magnetic particles, sometimes referred to as "pigment," coated on a plastic, paper or metal base. Information to be recorded is stored in the magnetic pigment as a series of small domains magnetized by a recording head. The coating layer of the magnetic medium includes a binder system which provides a cohesive matrix between the magnetic pigment particles and adheres such particles to the base.

The magnetic coating is applied to the base by coating equipment such as, for example, a gravure roll coater, and the coated base then typically immediately proceeds to a magnetic orientation step wherein orientation of the pigment particles is effected on the undried layer. In this step, the long axis of the pigment particles, typically acicular crystals, is made to coincide with the magnetization direction.

In order to achieve good recording performance, the magnetic coating must possess a wide variety of characteristics. Pigment particles, desirably of relatively uniform particle size, should form a high a proportion of the coating layer as possible. Further, the degree of dispersion of the pigment particles in the coating, often evaluated as degree of gloss, should be as high as possible. Further, the highly dispersed pigment particles must be capable of being adequately oriented, as previously described (the degree of orientation often measured as "squareness").

Still further, the adhesion and wear resistance of the magnetic coating or film should be high. Also, the coefficient of friction of the magnetic surface should be low against the recording and playback head material, and yet have an adequate value against the driving means, such as pinch rollers and capstan rollers.

Satisfying these and other diverse criteria has proven to require a delicate balance of basically reciprocal, or opposing, properties. A substantial amount of effort over the years has been directed to improving the various characteristics of magnetic recording media.

To satisfy the performance criteria, the binder system must possess adequate modulus, yet have satisfactory tensile strength and resilience. It has generally been found more desirable to satisfy these criteria by utilizing more than one material in the binder system. Typically, a polymer of relatively high molecular weight which is capable of being cross-linked or cured is utilized to provide the desired modulus. Various elastomers are also incorporated to achieve the desired resilience and toughness.

Conventional binder systems include a wide variety of high Tg (viz., glass transition) temperature) hardening polymers or resins, such as, for example, polyacrylates, polyesters, polyester amides, polyhydroxyethers and copolymers from monomers such as vinyl chloride, vinyl acetate, acrylonitrile, vinyl alcohol, vinyl butyral, and vinylidene chloride in combination with low Tg elastomeric polymers, including nitrile rubbers, polyesters, alkyl resins and polyester polyurethanes. The latter elastomers often represent the material of choice for high performance applications. Such resins have excellent toughness and abrasion resistance.

Typically, the hardening polymers contain hydroxyl functionality since cross-linking to further increase the modulus, durability and abrasion resistance characteristics can then be achieved by using polyfunctional isocyanates. While satisfactory cross-linking can be achieved with polyfunctional isocyanates, such materials are notoriously sensitive to moisture, which can cause problems. Also, cross-linking occurs over a period of time, including while the magnetic recording medium is in storage.

Premature cross-linking may also make calendering of the recording medium difficult or impossible.

It would accordingly be desirable to provide a binder resin capable of being cured or cross-linked by electron beam radiation techniques. Various electron beam curable, multifunctional acrylates and methacrylates are known. The difficulty is the method by which such materials may be utilized since these materials have mechanical properties and surface wear resistance characteristics that are generally considered inadequate for magnetic coatings.

The degree of dispersion and the capability of the pigment particles to be oriented in many binder systems are often considered inadequate in the absence of dispersion aids. A wide variety of techniques have been proposed to improve these characteristics. Thus, many surface active agents have been

employed for this purpose. These include higher aliphatic amines, higher fatty acids, phosphoric acid esters of higher alcohols such as polyoxyethylene phosphate alkyl ethers, esters of higher fatty acids and sorbitol, sodium alkylbenzenesulfonate, betaine-type, nonionic surface active agents and the like.

Magnetic coatings obtained by employing such surface active agents generally exhibit uniform dispersion of magnetic powder as well as good orientation where the powder or pigment is in the form of acicular particles. On the other hand, utilizaticn of such agents often adversely affects wear resistance or causes difficulties in quality during use. These problems are often attributed to migration or blooming of such surface active agents to the magnetic coating surface or to unnecessary plasticization of the hardening resin or of other components in the magnetic coating.

One attempt to obviate the migration problem is suggested by Great Britain Patent 2,097,415A. This suggests using with a cross-linkable or polymerizable resin binder a phosphoric acid ester having at least one polymerizable unsaturated double bond. Preferably, the phosphoric acid ester is a product obtained by reaction a phosphoric acid ester of a compound having two or more hydroxyl groups with an acrylic or methacrylic compound having a functional group reactive with an isocyanate group and also with a polyisocyanate compound. The phosphoric esters disclosed include two major types: (1) the reaction products of a long chain alkylether or polyester, an acrylic or methacrylic compound having a functional group reactive with an isocyanate group, and a polyisocyanate compound and (2) phosphoric esters of hydroxyalkyl acrylates.

Other binder systems disclosed utilize compounds including various hydrophilic groups such as sulfates, sulphonates, phosphonates and the like. JP-A-57-116, 474 (59-8127) discloses a magnetic layer binder composition of a polyurethane and optionally a polyester containing sulphonate groups, and a vinyl chloride polymer containing sulphonate, sulphate, carboxylate or phosphonate groups. The binder is stated to have good dispersing function to magnetic powder and the recording medium to have excellent service durability and good surface gloss.

JP-A-57-92421 (8229) discloses a magnetic recording medium which includes a polyester urethane having (1) at least one hydrophilic group such as $-SO_3M$, $-OSO_3H$, -COOM, $-P(O)(OM')_2$, $-NH_2$, -NHR, $-NR_1R_2$, and $-NR_1R_2R_3$, wherein M may be H, Li, Na or K; M′ may be H, Li, Na, K or a hydrocarbon group; and the R groups may be a hydrocarbon group and (2) at least two acrylic-type double bonds.

JP-A-57-92422 (8229) discloses a magnetic layer containing a polyurethane or polyester resin having (1) at least one hydrophilic group selected from $-OSO_3H$, -COOM, $-P(O)(OM')_2$, wherein M may be H, Li, Na, or K and M′ may be H, Li, Na, or K or a hydrocarbon group, and (2) a molecular weight of 200 to 5000 per hydrophilic group.

WO-A-84/00240 discloses a magnetic recording medium containing a polyvinyl chloride-vinyl acetate-vinyl alcohol and a polyurethane resin containing polar groups such as $-SO_3M$, $-OSO_3M'$ -COOM or

$$-\overset{\displaystyle (OM_2)}{\underset{\displaystyle O}{\overset{|}{\underset{\|}{P}}}}-(OM_1)$$

wherein M and M′ are as defined above and $M_1$ and $M_2$ may be Li, Na, K or an alkyl group, preferably an alkyl group with up to 23 carbon atoms.

JP-A-55-117734 (8043) discloses a binder for a magnetic recording medium which contains a copolymer of a phosphoric acid ester of an alkylene glycol acrylate or an alkylene glycol methacrylate and a copolymerizable monomer. The wetting properties to ferromagnetic material is stated to be very good, so that dispersibility in the binder is improved. Blooming is said not to occur as no high aliphatic acid, metallic soap, or the like is used.

Among the binder polymers in use in magnetic coating media are commercially available, partially hydrolyzed, (viz., partly saponified) vinyl chloride-vinyl acetate copolymers and terpolymers and phenoxy resins. For the highest performance applications, such as computer tapes, floppy disks and the like, phenoxy resins are often the binder resin of choice because of the superior durability, toughness and thermal stability that is provided.

Unfortunately, the dispersion and orientation characteristics of coatings utilizing such binder polymers are typically less than is desired. Considerable efforts have been undertaken to improve these characteristics with the use of a wide variety of dispersion aids.

US-A- 4,420,537 to Hayama et al. thus discloses a magnetic recording medium including a commercially available vinyl chloride-vinyl acetate-vinyl alcohol copolymer and a phosphoric ester-type anionic surfactant (e.g., "GAFAC® RE 610"). It is noted that when the content of the surfactant is more than 5 weight percent of the coating, the surfactant is bloomed out from the magnetic layer.

US-A-4,153,754 to Huisman notes difficulties with prior dispersing agents. Low molecular weight agents, such as lecithin, have the disadvantage that an excess is necessary to fully cover the particles to be dispersed. The high molecular weight dispersing agents, as described, for example in NL-A-65.11015, have the disadvantage that, due to their poor wetting properties, agglomerates of the particles are also covered with a dispersing agent. It is not readily possible, or it is possible only by the use of much energy, to disintegrate such agglomerates to individual particles. Huisman suggests using an N-acylsarcosine derivative as a dispersing agent with the binders. The Examples show use of such a dispersing agent with a commercially available phenoxy resin and a vinyl chloride-vinyl acetate-vinyl alcohol terpolymer.

US-A-4,291,100 to Horigome et al, discloses a magnetic recording medium utilizing a polyoxyethylenesorbitane higher fatty acid ester surfactant. The Examples include use of such surfactants with vinyl chloride-vinyl acetate copolymers with vinyl chloride-vinyl acetate-vinyl alcohol terpolymers.

US-A- 4,305,995 to Ota et al. shows a magnetic recording medium including a mixture of sorbitane mono-, di-, and tri-higher fatty acid ester surfactants. The Examples show use of such surfactants with vinyl chloride-vinyl acetate copolymers.

US-A-4,330,600 to Kawasumi et al. discloses a magnetic recording medium in which the dispersion characteristics of magnetizable particles are improved which results in improved saturation magnetic flux density and squareness ratio. These are achieved by treating the magnetizable particles with a titanium alcoholate compound having at least one group which is easily hydrolyzed and at least one oleophilic group which is hard to hydrolyze in an organic solvent. The Examples show use of such titanium alcoholates with a commercially available vinyl chloride-vinyl acetate copolymer binder.

US-A- 4,400,435 to Yoda et al. notes that vinyl chloride-vinyl acetate copolymers have been used as binders, but that such copolymers do not have functional groups whereby it is easy to improve the dispersibility of magnetic powder in a magnetic layer. It is further said that it is not easy to carry out a thermosetting reaction. The use of vinyl chloride-vinyl acetate-vinyl alcohol copolymers instead has been proposed; and, because of the hydroxyl groups present, the dispersibility of magnetic powder is improved and the thermosettable reaction can be performed. However, because of the vinyl alcohol component, the glass transition temperature of the copolymer is disadvantageously high so as to provide difficulties in improving the surface properties by a calendar process. A magnetic recording medium having improved orientation and maximum residual magnetic flux density is provided by using a vinyl chloride-vinyl acetate-maleic acid copolymer having a content of the maleic acid ccmponent of at least 1.5 percent.

In addition to the problems of providing a binder system in which the pigment particles can be highly dispersed to form a magnetic coating in which such particles can then be readily oriented in the first instance, the manner of usage can create further problems. Thus, achieving adequate dispersion requires use of relatively high energy mixing equipment. As one example, a mixture of the binder system in a solvent is provided, and the mixture is then thoroughly kneaded and agitated on a 3-roll or high speed agitation mixer or kneader. The resulting slurry is then often transferred to a ball mill, sand grind mill or other dispersion equipment to achieve an even higher degree of dispersion of the magnetic particles in the coating.

If the coating is used rather promptly after formation, no problem results. However, as is sometimes the case, usage requirements may dictate that the coating mixture be stored. Such storage can result in substantial decay of the advantageous dispersion characteristics originally achieved. The use of such "stale" coating mixtures thus presents problems as regards the processing required to allow the pigment particles to attain the desired orientation when such coating mixtures are used and processed. It is obviously economically undesirable to be forced to repeat the initial, high energy mixing sequence.

Accordingly, despite the considerable prior effort in this field, the need remains for a straightforward solution that will allow use of otherwise desirable binders to achieve the desired dispersion and orientation characteristics over a widespread variety of usage requirements.

A principal object of the present invention is to provide novel phosphorylated compositions for use in applications such as a magnetic coating to impart desirable dispersion and orientation characteristics.

A further object of this invention provides a novel binder system for a magnetic recording medium which may be substituted for conventional binders in formulations as essentially a plug-in substitution.

Yet another object lies in the provision of novel phosphorylated compositions that may be obtained by utilizing a straightforward, facile synthesis.

Another object of the present invention is to provide a binder system for magnetic recording medium which minimizes or eliminated the need to employ a dispersing agent which can cause blooming in use.

A still further object lies in the provision of a magnetic coating which is capable of being processed in conventionally utilized magnetic coating equipment.

Yet another object lies in the provision of a magnetic coating which may be stored for extended periods of time and yet may be readily processed to provide, upon usage, the desired magnetic characteristics.

Another object is to provide a binder system capable of being cross-linked or cured by electron beam radiation. A related object is to provide a hardening resin that is curable by electron beam radiation and which further provides desirable dispersion characteristics.

A further object of the present invention lies in the provision of a dispersing agent which can be chemically combined within the binder system to obviate migration or blooming in the cured coating.

These and other objects of the present invention will be apparent from the description set forth hereinafter.

The present invention is based on the discovery that certain lactone-adducts may be phosphorylated to provide magnetic recording media having desirable dispersion and magnetic characteristics. Such phosphorylated compositions can be synthesized in a straight forward, facile manner and can provide a magnetic coa ting having the viscosity and other characteristics that allow usage in conventional magnetic coating equipment. Inclusion in conventional magnetic coating formulations does not require significant change. By suitable selection in the synthesis, the resulting binder system should be capable of being cured by electron beam radiation. The resulting system may also be stored for extended periods of time before usage, and the system may thereafter be readily treated with a relatively low molecular weight phosphorylated material of this invention to allow achievement of the necessary magnetic characteristics. The relatively low molecular weight phosphorylated material may likewise be used as an additive in conventional binder systems for the same purpose. By suitable selection of the low molecular weight phosphorylated material for the particular curing technique to be employed, such materials will be chemically combined in the cured coating and will not bloom or migrate.

In accordance with one aspect of the present invention, the hardening resin utilized to provide the requisite modulus and other strength characteristics is suitably phosphorylated to provide characteristics adequate to achieve the requisite pigment dispersion and magnetic properties. In accordance with another aspect of this invention, a phosphorylated dispersant material capable of reaction directly or indirectly with the binder utilized is employed.

As used herein, the term "phosphorylation" means the conversion of hydroxyl groups to phosphates. Accordingly, the phosphorylated compositions of the present invention can be likewise considered as phosphate esters.

In accordance with one aspect of the present invention, a magnetic recording medium characterized by superior dispersion and magnetic property characteristics may be achieved by utilizing in the preparation a phosphorylated lactone-adduct.

The lactone-acrylate adduct of this invention and suitable for use as a dispersing agent in magnetic media is the reaction product of a lactone and a hydroxyalkyl acrylate or methacrylate. The lactone-acrylate adduct may be represented by the following formula:

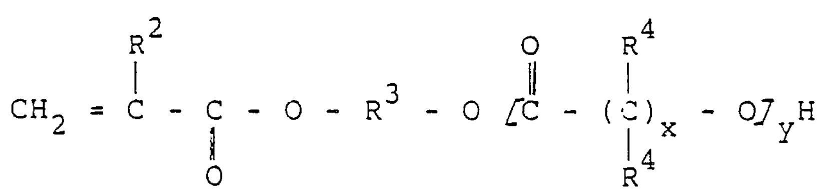

wherein $R^2$ is hydrogen or methyl, $R^3$ is an alkylene group of from 2 to about 10 carbon atoms, $R^4$ in independently hydrogen or an alkyl group of from 1 to about 12 carbon atoms, x is an integer of from about 4 to about 7, and y is an integer of from 1 to about 10.

The lactones suitable for use in preparing the lactone-acrylate adduct are characterized by the following formula:

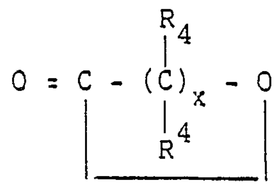

wherein $R^4$ is independently hydrogen or an alkyl of from 1 to about 12 carbon atoms, and x is from about 4 to about 7. The preferred lactone is epsilon-caprolactone.

The hydroxyalkyl acrylates and methacrylates which may be used include 2-hydroxyethyl acrylate and methacrylate, hydroxypropyl acrylate and methacrylate, hydroxybutyl acrylate and methacrylate, 2-hydroxy 3-chloro-propyl acrylate and methacrylate, 2,3-dihydroxy propyl acrylate and methacrylate, and the like, or mixtures thereof. As is known, the reactivity of the acrylates to electron beam radiation is superior to that of the methacrylates, thus the acrylates will generally be preferred. Hydroxyethylacrylate is particularly preferred. Also, if desired, in the formula previously set forth, the terminal methylene group could have one of the hydrogen atoms replaced by a methyl group. The resulting adduct would likely be less reactive to electron beam radiation that acrylates or methacrylates.

The lactone-acrylate adduct is prepared by reacting the lactone with the hydroxyalkyl acrylate in the presence of less than about 200 parts per million of a catalyst. The catalysts which may be used include one or more organometallic compounds and other metallic compounds such as stannic chloride or ferric chloride and other Lewis and protonic acids. Preferred catalysts include stannous octoate, dibutyltin dilaurate, and other tin compounds; titanates such as tetraisopropyl titanate and butyl titanate; and the like.

The reaction is carried out at a temperature of from about 100 to about 400°C, preferably from about 120 to about 130°C. The reaction may be carried out at atmospheric pressure, although higher or lower pressures may be used. The reaction is generally carried out in the presence of oxygen to inhibit polymerization of the hydroxyalkyl acrylate. The reaction is carried out for a period of from about 2 to about 20, preferably from about 3 to about 11 hours. The reaction is carried out in the presence of a suitable inhibitor to prevent polymerization of the hydroxyalkyl acrylate double bond. These inhibitors include the monomethyl ether of hydroquinone, benzoquinone, phenothiazine, methyl hydroquinone, 2,5-di-t-butylquinone, hydroquinone, benzoquinone and other common free radical inhibitors known in the art. The level of inhibitor used is less than 1000 parts per million, preferably less than 800 parts per million, and most preferably less than 600 parts per million.

Regarding the phosphorylation technique, the temperature at which the phosphorylating reaction is carried out is not critical but is dependent on the phosphorylating agent employed. In general, however, it is desirable that the phosphorylation reaction be carried out at elevated temperatures to provide adequate reaction of the hydroxyl groups and insure complete reaction, suitable temperatures being about 50°C to about 200°C. In carrying out the phosphorylation, the reaction should utilize a phosphorylating agent and conditions that will avoid forming significant amounts of higher molecular weight species, as would result when two adduct molecules are linked together through the phosphate moiety. The presence of such high molecular weight species can result in systems having undesirably high viscosities. This is obviously of greater significance when the starting material is already of a relatively high molecular weight.

Suitable phosphorylation agents include phosphoryl chloride and its derivatives: $PO(OR^3)_{n'}$ $-Cl_{3-n'}$, wherein $n'$ is 0, 1, 2, or 3 and $R^3$ is hydrogen, a saturated or unsaturated hydrocarbon radical having from 1 to about 20 carbon atoms, a cycloalkyl radical of from 1 to about 20 carbon atoms, an alkyl acrylate or methacrylate in which the alkyl radical is from 1 to about 10 carbon atoms, aryl and substituted aryl of from 6 to about 20 carbon atoms and adducts of hydroxyalkyl acrylates and methacrylates and a lactone (as described above), and mixtures thereof, or phosphorous pentoxide or the reaction product of phosphorous pentoxide with a hydroxyl-containing material including water, saturated or unsaturated alcohols having from 1 to 20 carbon atoms, hydroxyalkyl acrylates or methacrylates having from 2 to 10 carbon atoms, substituted and unsubstituted phenols and adducts of hydroxyalkyl acrylates and methacrylates and a lactone described above, and mixtures thereof.

The phosphorylation reaction may be carried out in any of a variety of aprotic solvents. Suitable examples include methylethylketone, tetrahydrofuran and cyclohexanone. The amount of the adduct starting material added to the aprotic solvent may be varied within a wide range, provided the material is soluble in the solvent and the viscosity of the solution is not so high as to prevent stirring and adequate mixing.

The degree of phosphorylation should be at least on the order of about 50% of the hydroxyl groups, and it is preferred that phosphorylation approach 100%. The desired levels of phosphorylation can be

readily obtained by providing the appropriate stoichiometric quantity of phosphorylating agent. Any unreacted phosphorylating agent can ordinarily be allowed to remain in the system as a diluent.

The resulting phosphorylated lactone-adduct provides superior dispersibility of the pigment particles in the magnetic coating and yields a magnetic coating capable of being satisfactorily oriented to provide the desired magnetic property characteristics. Such dispersants are of particular value, as well, in recovering the decayed properties of magnetic compositions which have been stored prior to usage.

## Reaction Product Design Considerations

It should be appreciated that the extend of phosphorylation desired must take into account the degree of conversion achieved with the particular process conditions used. A desired phosphorylation level may be achieved by adjusting the relative concentrations of the reactants utilized.

In the case of lactone-adducts, the reaction temperature is a principal factor. While ambient conditions result in incomplete conversion, reaction at an elevated temperature should achieve essentially complete conversion. Where incomplete conversion is obtained, the phosphorylated materials may be readily separated by known techniques, if desired.

## Description of the Phosphorylated products

It can be seen from the description of the phosphorylating agents described above that phosphorus may be included inthe phosphorylated lactone-adducts of the present invention in the form of a wide variety of phosphorus ester moieties, characterized by the formula:

$$-\overset{\overset{\displaystyle O}{\|}}{P}-(OR^{12})_2$$

wherein $R^{12}$ comprises hydrogen, alkyl (e.g. ethyl or n-butyl) or alkenyl having from 1 to about 20 carbon atoms, an alkyl acrylate or methacrylate residue having from 2 to about 10 carbon atoms in the alkyl segment, substituted and unsubstituted phenyl, the lactone-adduct described herein, or mixtures thereof.

The formula for the phosphorus moieties represents an idealized formula. Depending upon the reaction conditions and the particular phosphorylating agent employed, the resulting reaction product comprises a distribution of mono-, di- and triphosphate esters. Accordingly, in the idealized formula, $R^{12}$ may be solely hydrogen (providing a phosphate monoester), a mixture of hydrogen and the hydrocarbon residue of the hydrocarbon from which the derivative was prepared (providing a diester), or solely the hydrocarbon residue (providing a triester). For the purpose of the present invention, the phosphorus moiety will be described in terms of the formula set forth, wherein the formula is used to represent the reaction product, including those situations wherein a complex mixture or distribution of compositions is obtained.

## Magnetic Recording Medium

### Base

Any base or substrate may be utilized, and the particular substrate of choice will be dictated for the most part by the particular application. Polyethylene terephthalate and polypropylene films are in wide use as base materials for magnetic recording media. Where heat resistance is an important consideration, a polyimide film, polyamide film, polyarylether film, or the like may be utilized. In the case of a polyester film as a thin base, it is often used after monoaxial or biaxial orientation. It is likewise well known that pretreatment of the film may be beneficial to promote wetting and adhesion.

### Composition of the magnetic coating layer

The magnetic particles may be any of those known and useful in conventional magnetic recording media. Representative examples include acicular or granular $\gamma$-$Fe_2O_3$, $Fe_3O4$, Co-doped $\gamma$-$Fe_2O_3$, Co-doped $\gamma$-$Fe_2O_3$-$Fe_3O_4$ solid solution, Co-base-compound-adsorbed $\gamma$-$Fe_2O_3$, a Co-base-compound-adsorbed $Fe_3O_4$ (including those oxidized to an intermediate state between itself and $\gamma$-$Fe_2O_3$), and acicular

$CrO_2$. (The term "Co-base compound" as used herein means cobalt oxide, cobalt hydroxide, cobalt ferrite, cobalt ion-adsorbates and the like which enable the magnetic partic-les to take advantage of the magnetic anisotropy of cobalt in improving its coercive force). Also, the magnetic particle may be a ferromagnetic metal element or alloy, such as Co, Fe-Co, Fe-Co-Ni, or the like. Such a fine magnetic particle is prepared in a number of ways, including wet reduction of the starting material with a reducing agent such as $NaBH_4$, a treatment of the iron oxide surface with a Si compound and subsequent dry reduction with $H_2$ gas or the like, and vacuum evaporation in a low pressure argon gas stream. Fine particles or monocrystalline barium ferrite may be employed as well. The fine magnetic powder is used in the form of acicular or granular particles, depending on the application of the resulting magnetic recording medium.

It will be generally desirable to utilize a relatively large amount of magnetic particles in the coating layer. Typical compositions of the coating layer will thus include about 65 or 70 to about 85 or 90 percent magnetic particles, based upon the total weight of the coating layer. As is known, it is desirable to utilize pigment particles of relatively uniform size, with typically used particles having a long axis of about 0.4 $\mu m$ or even less being employed. The remainder of the coating layer will comprise the binder system, including the hardening resin, and typically an elastomeric polymer, a dispersant, a cross-linker and any auxiliary agents. Depending upon the novel phosphorylated material of the present invention which is utilized, the dispersant as such may be minimized or even eliminated. Further, when electron beam radiation curable materials are used, the cross-linking agent need not be employed.

Accordingly, and conceptually, in addition to the pigment particles, the only additional essential component in accordance with this invention is the hardening resin itself. Typical coating layers will, however, often include the additional components identified depending upon the particular end use application. As is apparent from the amount utilized in typical formulations of the pigment particles, the remainder of the coating layer will generally represent about 10 or 15 to 30 or 35 percent by weight of the coating layer.

As has been previously discussed, the binder system will generally, and desirably, include an elastomeric polymer in an amount sufficient to provide the coating layer with the desired resilience and the like. Many elastomeric polymers suitable for this purpose are known and may be utilized. Polyester urethanes are often preferred for high performance applications. Suitable materials are commercially available. These materials may be, in general, described as the reaction products of polyester polyols, short chain diols, and isocyanates. These resins have excellent toughness and abrasion resistance characteristics.

A wide variety of polyisocyanate cross-linkers is known and may be used. As one example, it is suitable to use toluene diisocyanate (TDI). The amount of the cross-linking agent used is typically about 20 to 30 percent of the amount that would be required stoichiometrically.

As is known, a variety of auxiliary agents is sometimes employed in the magnetic coating layer. Such additives are known and may be employed, if desired for the particular application. Examples of such auxiliary agents include antistatic agents, lubricants, sensitizers, leveling agents, wear-resisting agents, and film-reinforcing agents.

In further accordance with the present invention, the magnetic coating layer utilizes the phosphorylated materials of the present invention to provide the necessary dispersing and orientation characteristics of the coating, and, in some instances, function as the hardening resin as well. If the phosphorylated material has characteristics which provide the necessary modulus and the like for the magnetic coating layer, no other hardening resin need be employed. However, if desired, the phosphorylated materials of the present invention can be utilized with compatible hardening resins to provide the desired magnetic coating layer.

In accordance with this invention, the use of the phosphorylated materials of the present invention should provide improved dispersion and orientation characteristics. However, if desired, other conventional dispersing agents may be employed.

## Preparation of Coating

The recording medium may generally be prepared by dissolving the binder system in a sufficiently volatile vehicle to provide a coatable dispersion of fine magnetizable particles. The dispersion can then be coated onto the substrate to provide a coating thereon. The magnetic recording medium may be prepared by methods described in the art such as in, for example, S. Tochihara, "Magnetic Coatings and their Applications in Japan," Progress in Organic Coatings, 10 (1982), pages 195 to 204.

## Post-Additive Treatment

In accordance with yet another aspect of the present invention, the phosphorylated materials of the present invention may be utilized to, in effect, rejuvenate the decayed properties of magnetic compositions stored for some time prior to usage. Often, after storage, magnetic compositions which exhibited satisfactory dispersion during preparation possess undesirable orientation characteristics when processed to form a tape or the like due to change in the compositions during storage. The addition of appropriate phosphorylated materials of the present invention will, without a repetition of the high energy mixing techniques used to prepare the magnetic compositions in the first instance, allow the coating to provide adequate magnetic properties upon orientation. When used in this fashion, it is preferred to utilize the lower molecular weight phosphorylated materials of this invention. Suitable materials will generally have a molecular weight of less than about 4000. In general, the lower molecular weight materials are more effective. It is thus preferred to utilize the phosphorylated lactone-adducts having a number average molecular weight of less than about 4000.

Usage of these materials can provide substantial restoration of the properties and should achieve more than adequate orientation, as is evidenced by the squareness measurement. Selected usage of these materials as a post-additive provides the further advantage that there is no blooming or migration of the additive.

The lactone-adducts are particularly desirable for use in binder systems which are to be cured by electron beam radiation because of the presence of the unsaturated carbon-carbon bonds of the acrylate or methacrylate residue. When used in the respective binder systems described, these materials are chemically combined in the cured coating and do not migrate or bloom.

## Other Applications

While use of the phosphorylated materials of the present invention provides highly advantageous properties in magnetic recording media and the present invention has been described in conjunction with this application, it should be appreciated that such materials likewise can be utilized as dispersants and/or hardening resins in any other application where the characteristics of such phosphorylated materials could desirably be incorporated. For example, conventional zinc-rich coatings are useful in many applications which require corrosion resistance and the like. Such compositions typically comprise a high percentage of zinc particles (up to about 85 to 90 percent by weight of the composition) and a resin, together with such optional components as antisettling agents, thickening agents and water scavengers, as is known. For zinc-rich maintenance coatings, and other clear and pigmented coatings, any of the phosphorylated materials of the present invention should provide improved dispersibility and improved adhesion to substrates. The phosphorylated materials of this invention can accordingly be readily utilized in conjunction with such coatings.

Indeed, the phosphorylated lactone-adducts of this invention may be used as surfactants in emulsion polymerizations.

Further, the more highly phosphorylated materials of this invention should be water dispersible and thus may be useful in applications where this property would be desirable, such as, for example, in water-borne coatings.

## EXAMPLES

The following Examples are representative of the present invention, and not in limitation thereof. The starting materials used, the preparation of the magnetic media formulations, and the evaluation techniques utilized in the ensuing Examples were as follows:

### Starting Materials

### Phenoxy Resin A

A commercially available reaction product of bisphenol-A and epichlorohydrin having a specific gravity of 1.17 to 1.19, a viscosity at 25 °Cm in 40% methylethylketone solution, of 4500-7000 mPa.s (cps), a

nonvolatiles content of 99% by weight, and a Tg of 98-100° C.

Vinyl Resin D

A commercially available, partially hydrolyzed vinyl chloride-vinyl acetate copolymer having a number average molecular weight of about 23,000, an average hydroxyl content of 2.3% by weight, and a Tg of 79° C.

Vinyl Resin F

A partially hydrolyzed vinyl chloride-vinyl acetate-maleic acid terpolymer having a number average molecular weight of about 20,000, an average hydroxyl content of 2% by weight, and a Tg of 74° C.

Lactone-adduct

A lactone-adduct made from hydroxyethyl acrylate and epsilon-caprolactone and having an average of two caprolactone units per acrylate.

Elastomer A

B.F. Goodrich "Estane® 5701 F-1" polyester polyurethane elastomer having a specific gravity of 1.21, a Tg of -25° C and a Brookfield viscosity of 300 mPa.s (cps) for a 15% total solids solution in tetrahydrofuran.

## Preparation Of The Magnetic Media Formulations

Formulations were prepared by premixing 134 grams of 15 percent cyclohexanone solution of the resin with 160 grams of cyclohexanone and adding 200 grams of cobalt-modified, iron oxide magnetic pigment with particles having a long axis of about 0.4 µm ("PFERRICO® 2566" magnetic pigment, Pfizer, Inc.). After the mixture was well blended with an air stirrer for 15-30 minutes, the resulting slurry was added to a Premier Mill filled with 1.3mm glass beads and milled for about one hour.

Those formulations containing only vinyl or phenoxy resins, including the phosphorylated derivatives of the present invention, were discharged at this point and evaluated. Those to contain Elastomer A were stopped at this stage, and the Elastomer A was added (143 grams of a 15% solution in cyclohexanone). The formulation was then milled for an additional hour and discharged.

Any post-additions were made at this stage by mixing the ingredients by hand with a spatula or a stirring rod. The percentages in such post-additions are all based upon the weight of the pigment in the formulation.

## Magnetic Media Evaluations

Gloss

This was evaluated by preparing a 0.0254mm (1-mil) drawdown on glass, allowing the formulation to air dry and then measuring the gloss with a 60% gloss meter.

Squareness

This was measured by preparing a 0.0762 mm (3-mil) wet drawdown on a Mylar® substrate and then

pulling the Mylar® across a bar magnet to orient the magnetic particles. Squareness was then measured on a 5.1x5.1 cm (2x2 inch) piece of this oriented coating using a LDJ Model 7000A B-H Meter. According to the pigment manufacturer, the maximum squareness achievable with the magnetic pigment utilized is 0.84.

## EXAMPLE 1

This Example shows the preparation of a novel phosphate ester in accordance with this invention, prepared from the lactone-adduct.

This phosphate ester was prepared by dissolving the lactone-adduct precursor in an aprotic solvent, either acetone or cyclohexanone, and adding phosphorus pentoxide with stirring. The reaction was carried out at room temperature with stirring for 24 hours, or until all of the phosphorus pentoxide had been dissolved, whichever was longer. The sample was stored at room temperature until used. It was used without further purification.

Table I sets forth the starting material used, the percent of phosphorus pentoxide being based upon the weight of the starting material, and the percent substitution being the theoretical percentage of the initial hydroxyl groups present converted to phosphate esters, assuming that 3 phosphate esters are produced from each $P_2O_5$ molecule:

TABLE I

| EXAMPLE | STARTING MATERIAL | % $P_2O_5$ | % SUBSTITUTION |
|---|---|---|---|
| 1 | Lactone-adduct | 14 | 100 |

## EXAMPLES 2-3

These Examples demonstrate the utility of the phosphorylated lactone-adducts of the present invention as a dispersant in a magnetic coating.

Coatings were made from Vinyl Resin D and Phenoxy Resin A and the gloss and squareness characteristics of such coatings were compared to coatings to which the lactone-adduct phosphate of the present invention has been added. The results are set forth in Table II:

TABLE II

| EXAMPLE NO. | RESIN | % LACTONE-ADDUCT PHOSPHATE | GLOSS | SQUARENESS |
|---|---|---|---|---|
| Control | Vinyl Resin D | 0 | 59 | 0.78 |
| 2 | Vinyl Resin D | 2 | 61 | 0.85 |
| Control | Phenoxy Resin | 0 | -- | ---- |
| 3 | Phenoxy Resin | 3 | 54 | 0.81 |

As can be seen from Table II the use of the lactone-adduct phosphate of this invention results in both enhanced gloss and squareness.

## EXAMPLES 4-7

These Examples illustrate the function of the lactone-adduct phosphates of the present invention as a post-additive dispersant to improve the squareness of a previously prepared formulation.

Magnetic coatings using the elastomeric polymer (Elastomer A) and Vinyl Resin F were prepared. The squareness of the formulation was evaluated in comparison with this formulation to which varying amounts of the lactone-adduct phosphate of the present invention has been added as a post-additive. The results achievable with a prior art sufactant are set forth for comparative purposes. The results are set forth in Table III:

TABLE III

| EXAMPLE NO. | BINDER COMPOSITION | SQUARENESS |
|---|---|---|
| Control | 10% Vinyl Resin F 10% Elastomer A | 0.69 |
| 4 | Control + 5% lactone-adduct phosphate | 0.83 |
| 5 | Control + 2.5% lactone-adduct phosphate | 0.80 |
| 6 | Control + 1.2% lactone-adduct phosphate | 0.73 |
| 7 | Control + 0.6% lactone-adduct phosphate | 0.71 |
| Prior Art | Control + 5% "GAFAC® RE-610 Surfactant" | 0.84 |

As shown, the post-addition of the lactone-adduct phosphate of the present invention enhances the squareness characteristic of the magnetic coating. While the prior art surfactant likewise provides such improvement, the use of the lactone-adduct phosphate of the present invention obviates the known migration problem of the prior art surfactant in electron beam curable binder systems.

## Claims

1. A phosphorylated composition, for enhancing the dispersibility of particles in a medium, of a hydroxyalkyl acrylate or methacrylate-lactone adduct having the following formula:

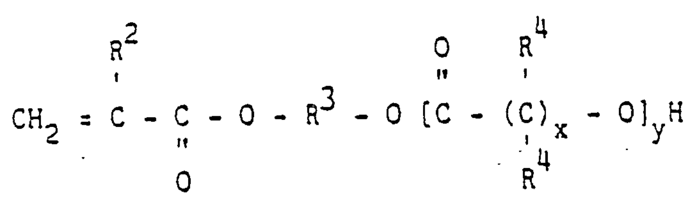

wherein $R^2$ is hydrogen or methyl, $R^3$ is an alkylene group of 2 to about 10 carbon atoms, $R^4$ is independently hydrogen or an alkyl group of from 1 to about 12 carbon atoms, x is from about 4 to about 7, and y is from 1 to about 10; a sufficient number of the hydroxyl groups present in said adduct having been phosphorylated to enhance the dispersibility of said particles in said medium.

2. The composition of claim 1 wherein the hydroxyalkyl acrylate or methacrylate-lactone adduct is a hydroxyethyl acrylate adduct; a hydroxyethyl methacrylate adduct; a hydroxypropyl acrylate adduct; or a hydroxypropyl methacrylate adduct.

3. The composition of claim 1 wherein the hydroxyalkyl acrylate or methacrylate-lactone adduct is an adduct of a hydroxyalkyl acrylate or methacrylate, preferably hydroxyethyl acrylate, and spsilon-caprolactone and wherein y in the formula of claim 1 has an average value of from about 1 to about 4, preferably of about 2.

4. A composition according to any one of claims 1 to 3, wherein the phosphorus moiety of the phosphorylated hydroxyl group is characterized by the formula:

$$-\overset{\overset{O}{\|}}{P}-(OR^{12})_2$$

wherein $R^{12}$ comprises hydrogen, alkyl or alkenyl having from 1 to about 20 carbon atoms, substituted or unsubstituted phenyl, an alkyl acrylate or methacrylate residue having from 2 to about 10 carbon atoms in

the alkyl segment, a residue of said lactone-adduct or mixtures thereof.

5. A dispersion comprising a medium, particles dispersed therein and a composition according to any one of claims 1 to 4 present in an amount sufficient to enhance the extend of dispersion of said particles in said medium.

6. A magnetic recording medium comprising a substrate and a magnetic recording layer thereon comprising a cured binder system and magnetic particles, said binder system having included therein a composition according to any one of claims 1 to 4 present in an amount sufficient to enhance the dispersion characteristics of said magnetic coating layer.

7. A method of enhancing the magnetic properties of a magnetic coating comprising a binder system and magnetic particles dispersed therein following storage thereof which comprises adding to said magnetic coating a composition according to any one of claims 1 to 4 in an amount sufficient to enhance the magnetic properties thereof.